# EUROPÄISCHE PATENTANMELDUNG

(11) **EP 1 775 118 A1**
(43) Veröffentlichungstag der Anmeldung: **18.04.2007**
(21) Anmeldenummer: 05405692.4
(22) Anmeldetag: 08.12.2005
(51) Int. Cl.: B32B 15/08, B65D 75/36, A61J 1/03

(54) **Kaltverformbares Laminat für Blisterbodenteile**

(30) Priorität: 12.10.2005 EP 05405583
(71) Anmelder: Alcan Technology & Management Ltd., 8212 Neuhausen am Rheinfall (CH)
(72) Erfinder: Pasbrig, Erwin, 78224 Singen (DE); Brandl, Oliver, 78462 Konstanz (DE)

(57) **Zusammenfassung**

Ein kaltverformbares Laminat aus einer beidseitig mit Kunststoff beschichteten Aluminiumfolie (26, 46) zur Herstellung von Bodenteilen von Blisterverpackungen für im Bodenteil gefriergetrocknete pharmazeutische Produkte weist die Schichtfolge
- Schicht A (22) / Schicht B (24) / Aluminiumfolie (26) / Schicht C (28) / Schicht D (30), wobei die Schicht A eine 10 bis 100 µm dicke Folie aus COC/PE blend oder coextrudiertem COC-PE ist, die Schichten B und C 10 bis 50 µm dicke Folien aus oPA, oPP oder PET sind und die Schicht D eine10 bis 100 µm dicke Folie aus COC/PE blend, coextrudiertem COC-PE oder PVC ist, wobei die Schichten A und D verschieden sind, oder
- Schicht A (22) / Schicht B (24) / Aluminiumfolie (26) / Schicht C (28) / Schicht D (30), wobei die Schicht A eine 4 bis 20 µm dicke Folie aus oPP oder PET ist, die Schichten B und C 10 bis 50 µm dicke Folien aus oPA oder PET sind und die Schicht D eine10 bis 100 µm dicke Folie aus COC/PE blend oder coextrudiertem COC/PE ist, oder
- Schicht B (44) / Aluminiumfolie (46) / Schicht C (48 / Schicht D (50), wobei die Schichten B und C 10 bis 50 µm dicke Folien aus oPA oder PET sind und die Schicht D eine Beschichtung aus PE mit einer Grammatur von 8 bis 40 g/m² ist, oder
- Schicht B (44) / Aluminiumfolie (46) / Schicht C (48 / Schicht D (50), wobei die Schichten B und C 10 bis 50 µm dicke Folien aus oPA oder PET sind und die Schicht D eine 10 bis 100 µm dicke Folie aus COC/PE blend oder coextrudiertem COC/PE ist, auf.

## Beschreibung

Die Erfindung betrifft ein kaltverformbares Laminat aus einer beidseitig mit Kunststoff kaschierten Aluminiumfolie zur Herstellung von Bodenteilen von Blisterverpackungen für in Näpfen im Bodenteil gefriergetrocknete pharmazeutische Produkte.

Kaltverformbare Laminate aus einer beidseitig mit Kunststoff kaschierten Aluminiumfolie werden unter anderem zur Herstellung von Bodenteilen von Blisterverpackungen für Arzneimittel verwendet. In die Bodenteile sind Näpfe zur Aufnahme einzelner Tabletten oder anderer Formen von Einzeldosen geformt. Die Aluminiumfolie dient hier primär als Barriereschicht gegen den Durchtritt von Wasserdampf und Gasen und schützt die Produkte vor allem vor einer Aufnahme oder Abgabe von Feuchtigkeit.

Herkömmliche Laminate zur Herstellung von Bodenteilen von Blisterverpackungen für Arzneimittel haben häufig den Aufbau oPA / Aluminiumfolie / Siegelschicht. Gebräuchliche Siegelschichten bestehen aus 15 bis 100 µm PVC, 20 - 60 µm PP oder 30 - 50 µm PE. Nach Füllung der Näpfe wird einer gegebenenfalls peelbare Deckfolie gegen die Bodenteile gesiegelt. Herkömmliche Deckfolien sind gegebenenfalls mit Kunststoff beschichtete, mit Folie kaschierte oder lackierte Aluminiumfolien.

Eine neue Form von Drug Delivery Systems (DDS) sind gefriergetrocknete Arzneimittel. Mit dieser Darreichungsform wird der Wirkstoff im Rachenraum freigesetzt und gelangt über die Schleimhäute in den Blutkreislauf.

Ein erster Weg zur Herstellung dieser DDS ist die Herstellung der gefriergetrockneten Arzneimittel und die nachfolgende Befüllung der Blister analog der Verpackung konventioneller Tabletten.

Ein zweiter Weg zur Herstellung dieser DDS besteht darin, das Arzneimittel in flüssiger Form in die im Bodenteil einer Blisterverpackung angeordneten Näpfe zu füllen und die Gefriertrocknung direkt in den Näpfen durchzuführen. In der Praxis hat sich jedoch gezeigt, dass Laminate aus einer mit Kunststoff beschichteten Aluminiumfolie unter dem Einfluss der Temperaturwechsel während des Gefriertrocknungsprozesses zum Einrollen neigen.

Bedingt durch den Herstellungsprozess werden beim Verfahren mit direkt in den Blisterbodenteilen durchgeführter Gefriertrocknung nach der Kaltverformung des Laminates Folienabschnitte mit Blisterbodenteilen gestanzt, deren Näpfe nachfolgend mit dem in flüssiger Form vorliegenden Arzneimittel gefüllt werden. Die Folienabschnitte mit den gefüllten Näpfen werden anschliessend kontinuierlich durch einen Gefriertunnel geführt. Damit keine Flüssigkeit aus den Näpfen auf die Siegelschicht gelangen kann, müssen die Folienabschnitte während des Gefrierprozesses plan liegen, d. h., es darf kein Verzug auftreten.

Aus der EP-A-0 646 367 ist ein Laminat aus einer Aluminiumfolie mit beidseitig angeordneten Kunststoffschichten bekannt, wobei die Schichten zur Vermeidung eines Verzugs der Blisterbodenteile während der Gefriertrocknung im wesentlichen gleiche thermische Ausdehnungskoeffizienten besitzen. Diese Bedingung ist bei beidseitiger Anordnung identischer Kunststoffschichten erfüllt.

Der Erfindung liegt die Aufgabe zu Grunde, ein Laminat der eingangs genannten Art zu schaffen, welches sich zur Herstellung von Bodenteilen von Blisterverpackungen für direkt im Bodenteil gefriergetrocknete pharmazeutische Produkte eignet, ohne dass die auf beiden Seiten der Aluminiumfolie angeordneten Kunststoffschichten gleiche thermische Ausdehnungskoeffizienten besitzen müssen.

Zur erfindungsgemässen Lösung der Aufgabe führt, dass das Laminat die Schichtfolge
- Schicht A / Schicht B / Aluminiumfolie / Schicht C / Schicht D, wobei die Schicht A eine 10 bis 100 µm dicke Folie aus COC/PE blend oder coextrudiertem COC/PE ist, die Schichten B und C 10 bis 50 µm dicke Folien aus oPA, oPP oder PET sind und die Schicht D eine10 bis 100 µm dicke Folie aus COC/PE blend, coextrudiertem COC/PE oder PVC ist, wobei die Schichten A und D verschieden sind, oder
- Schicht A / Schicht B / Aluminiumfolie / Schicht C / Schicht D, wobei die Schicht A eine 4 bis 20 µm dicke Folie aus oPP oder PET ist, die Schichten B und C 10 bis 50 µm dicke Folien aus oPA oder PET sind und die Schicht D eine10 bis 100 µm dicke Folie aus COC/PE blend oder coextrudiertem COC/PE ist, oder
- Schicht B / Aluminiumfolie / Schicht C / Schicht D, wobei die Schichten B und C 10 bis 50 µm dicke Folien aus oPA oder PET sind und die Schicht D eine Beschichtung aus PE mit einer Grammatur von 8 bis 40 g/m² ist, oder
- Schicht B / Aluminiumfolie / Schicht C / Schicht D, wobei die Schichten B und C 10 bis 50 µm dicke Folien aus oPA oder PET sind und die Schicht D eine 10 bis 100 µm dicke Folie aus COC/PE blend oder coextrudiertem COC/PE ist,
aufweist.

Bevorzugt weisen die Folien der Schichten A und D aus COC/PE blend, coextrudiertem COC/PE oder PVC eine Dicke von 15 bis 60 µm, die Folien der Schichten A aus oPP oder PET eine Dicke von 6 bis 10 µm und die Folien der Schichten B und C eine Dicke von 12 bis 30 µm auf. Im Fall einer Beschichtung weist die Schicht D eine bevorzugte Grammatur von 10 bis 30 g/m² auf.

Die Schicht D bildet die spätere Siegelschicht beim Aufsiegeln einer Deckfolie auf ein aus dem erfindungsgemässen Laminat hergestelltes Bodenteil einer Blisterverpackung.

Neben dem speziellen Schichtaufbau ist die unterschiedliche chemische Zusammensetzung und oder der unterschiedliche Aufbau der beiden Aussenschichten des Laminates ein erfindungswesentliches Merkmal.

Die Aluminiumfolie liegt im Zustand weich vor und weist eine Dicke von 20 bis 100 µm, vorzugsweise 30 bis 60 µm, auf.

Die einzelnen Schichten können durch Kaschierung mit lösemittelbasierten, lösemittelfreien oder wässrigen Klebstoffen, durch Extrusionskaschierung, Heisskalandrierung und /oder Extrusionsbeschichtung mit und ohne Primer verbunden werden.

In Tabelle 1 sind die für die erfindungsgemässen Laminate bevorzugten Folienkombinationen zusammengestellt. Die Kurzbezeichnungen der den Folien zugrunde liegenden Kunststoffe bedeuten:

| | | |
|---|---|---|
| oPA | orientiertes Polyamid | PE Polyethylen |
| oPP | orientiertes Polypropylen | PVC Polyvinylchlorid |
| PET | Polyethylenterephthalat | COC Cycloolefin-Copolymer |
| COP | Cycloolefin-Polymer | |

**Tabelle 1: Bevorzugte Laminataufbauten**

| **Nr.** | **Schicht A** | **Schicht B** | **AI** | **Schicht C** | **Schicht D** |
|---|---|---|---|---|---|
| 1 | 25 µm COC/PE blend | 15 µm oPA | 45 µm | 15 µm oPA | 25 µm COC/PE coex |
| 2 | 25 µm COC/PE blend | 15 µm oPA | 60 µm | 15 µm oPA | 25 µm COC/PE coex |
| 3 | 25 µm COC/PE blend | 25 µm oPA | 45 µm | 25 µm oPA | 25 µm COC/PE coex |
| 4 | 25 µm COC/PE blend | 25 µm oPA | 60 µm | 25 µm oPA | 25 µm COC/PE coex |
| 5 | 40 µm COC/PE blend | 15 µm oPA | 45 µm | 15 µm oPA | 40 µm COC/PE coex |
| 6 | 40 µm COC/PE blend | 15 µm oPA | 60 µm | 15 µm oPA | 40 µm COC/PE coex |
| 7 | 40 µm COC/PE blend | 20 µm oPA | 45 µm | 20 µm oPA | 40 µm COC/PE coex |
| 8 | 40 µm COC/PE blend | 20 µm oPA | 60 µm | 20 µm oPA | 40 µm COC/PE coex |
| 9 | 25 µm COC/PE blend | 25 µm oPA | 45 µm | 23 µm PET | 25 µm COC/PE coex |
| 10 | 25 µm COC/PE blend | 25 µm oPA | 60 µm | 23 µm PET | 25 µm COC/PE coex |
| 11 | 25 µm COC/PE coex | 15 µm oPA | 45 µm | 15 µm oPA | 25 µm COC/PE blend |
| 12 | 25 µm COC/PE coex | 15 µm oPA | 60 µm | 15 µm oPA | 25 µm COC/PE blend |
| 13 | 40 µm COC/PE blend | 20 µm oPP | 45 µm | 20 µm oPP | 40 µm COC/PE coex |
| 14 | 40 µm COC/PE blend | 20 µm oPP | 60 µm | 20 µm oPP | 40 µm COC/PE coex |
| 15 | 40 µm COC/PE coex | 20 µm oPA | 45 µm | 20 µm oPA | 15 µm PVC |
| 16 | 40 µm COC/PE coex | 20 µm oPA | 60 µm | 20 µm oPA | 30 µm PVC |
| 17 | 25 µm COC/PE blend | 23 µm PET | 45 µm | 23 µm PET | 25 µm COC/PE coex |
| 18 | 25 µm COC/PE blend | 23 µm PET | 60 µm | 23 µm PET | 25 µm COC/PE blend |
| 19 | 6 µm PET | 15 µm oPA | 45 µm | 15 µm oPA | 25 µm COC/PE coex |
| 20 | 8 µm OPP | 15 µm oPA | 60 µm | 15 µm oPA | 25 µm COC/PE blend |
| 21 | 9 µm PET | 25 µm oPA | 45 µm | 25 µm oPA | 25 µm COC/PE coex |
| 22 | 10 µm OPP | 25 µm oPA | 60 µm | 25 µm oPA | 25 µm COC/PE blend |
| 23 | 9 µm PET | 25 µm oPA | 45 µm | 25 µm oPA | 40 µm COC/PE coex |
| 24 | 10 µm OPP | 25 µm oPA | 60 µm | 25 µm oPA | 40 µm COC/PE blend |
| 25 | 6 µm PET | 15 µm oPA | 45 µm | 12 µm PET | 25 µm COC/PE coex |
| 26 | 8 µm oPP | 15 µm oPA | 60 µm | 12 µm PET | 25 µm COC/PE blend |
| 27 | 9 µm PET | 25 µm oPA | 45 µm | 23 µm PET | 25 µm COC/PE coex |
| 28 | 10 µm OPP | 25 µm oPA | 60 µm | 23 µm PET | 25 µm COC/PE blend |
| 29 | 9 µm PET | 23 µm PET | 45 µm | 23 µm PET | 40 µm COC/PE coex |
| 30 | 10 µm OPP | 23 µm PET | 60 µm | 23 µm PET | 40 µm COC/PE blend |
| 31 | | 15 µm oPA | 45 µm | 15 µm oPA | 10 g/m² PE |
| 32 | | 15 µm oPA | 60 µm | 15 µm oPA | 10 g/m² PE |
| 33 | | 25 µm oPA | 45 µm | 25 µm oPA | 15 g/m² PE |
| 34 | | 25 µm oPA | 60 µm | 25 µm oPA | 15 g/m² PE |
| 35 | | 25 µm oPA | 45 µm | 23 µm PET | 15 g/m² PE |
| 36 | | 25 µm oPA | 60 µm | 23 µm PET | 15 g/m² PE |
| 37 | | 23 µm PET | 45 µm | 23 µm PET | 15 g/m² PE |
| 38 | | 23 µm PET | 60 µm | 23 µm PET | 15 g/m² PE |
| 39 | | 15 µm oPA | 45 µm | 15 µm oPA | 25 µm COC/PE coex |
| 40 | | 15 µm oPA | 60 µm | 15 µm oPA | 25 µm COC/PE blend |
| 41 | | 25 µm oPA | 45 µm | 25 µm oPA | 25 µm COC/PE coex |
| 42 | | 25 µm oPA | 60 µm | 25 µm oPA | 25 µm COC/PE blend |
| 43 | | 25 µm oPA | 45 µm | 25 µm oPA | 40 µm COC/PE coex |
| 44 | | 25 µm oPA | 60 µm | 25 µm oPA | 40 µm COC/PE blend |
| 45 | | 15 µm oPA | 45 µm | 12 µm PET | 25 µm COC/PE coex |
| 46 | | 15 µm oPA | 60 µm | 12 µm PET | 25 µm COC/PE blend |
| 47 | | 25 µm oPA | 45 µm | 23 µm PET | 25 µm COC/PE coex |
| 48 | | 25 µm oPA | 60 µm | 23 µm PET | 25 µm COC/PE blend |
| 49 | | 23 µm PET | 45 µm | 23 µm PET | 40 µm COC/PE coex |
| 50 | | 23 µm PET | 60 µm | 23 µm PET | 40 µm COC/PE blend |

Ein bevorzugtes Anwendungsgebiet des erfindungsgemässen Laminates liegt in der Herstellung von Bodenteilen von Blisterverpackungen für in Näpfen im Bodenteil gefriergetrocknete pharmazeutische Produkte.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Draufsicht auf ein Bodenteil einer Blisterverpackung;
- Fig. 2 einen Schnitt durch das Bodenteil von Fig. 1 nach der Linie I-I;
- Fig. 3 einen Querschnitt durch eine erste Ausführungsform eines Laminates zur Herstellung von Blisterbodenteilen;
- Fig. 4 einen Querschnitt durch eine zweite Ausführungsform eines Laminates zur Herstellung von Blisterbodenteilen;
- Fig. 5 einen Querschnitt durch eine Blisterverpackung aus einem Bodenteil mit aufgesiegelter Deckfolie.

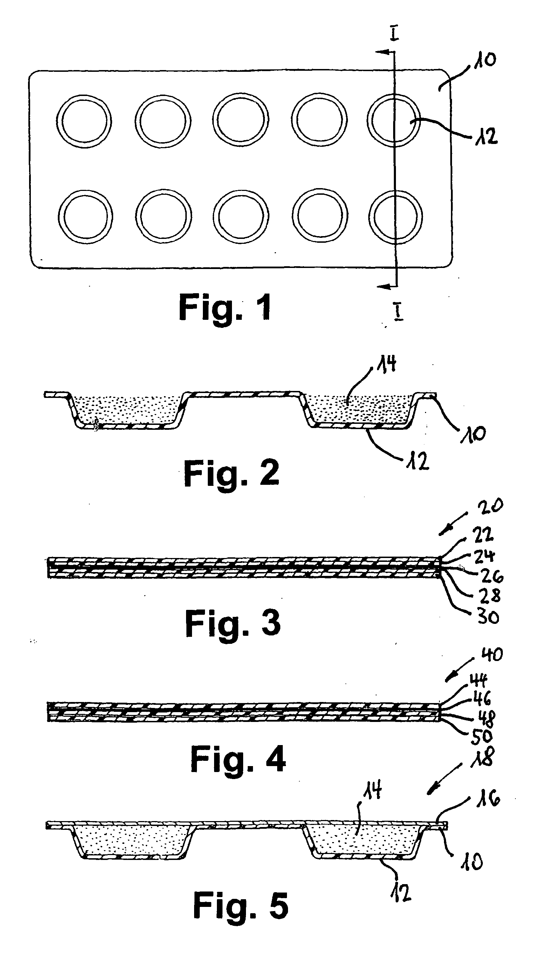

Ein in den Fig. 1 und 2 dargestelltes Bodenteil 10 einer Blisterverpackung besteht aus einem Laminat, aus welchem durch Kaltverformung Vertiefungen in der Form von Näpfen 12 herausgeformt sind. In jedem Napf 12 befindet sich eine Einzeldosis 14 in flüssiger Form.

Ein in Fig. 3 gezeigtes erstes Laminat 20 zur Herstellung des Bodenteils 10 weist von aussen nach innen den folgenden Schichtaufbau auf:

| | | |
|---|---|---|
| 22 | Schicht A | z. B. Folie aus COC/PE blend, 40 µm dick, oder Folie aus PET, 9 µm dick |
| 24 | Schicht B | z. B. Folie aus oPA, 20 µm dick |
| 26 | Aluminiumfolie | z. B. 60 µm dick |
| 28 | Schicht C | z. B. Folie aus oPA, 20 µm dick |
| 30 | Schicht D | z. B. Folie aus COC/PE coex, 40 µm dick |

Die Schicht A ist die spätere Aussenseite eines aus dem Laminat 20 hergestellten Blisterbodenteils, die Schicht D die Siegelseite zum Aufsiegeln einer Deckfolie.

Ein in Fig. 4 gezeigtes zweites Laminat 40 zur Herstellung des Bodenteils 10 weist von aussen nach innen den folgenden Schichtaufbau auf:

| | | |
|---|---|---|
| 44 | Schicht B | z. B. Folie aus oPA, 15 µm dick |
| 46 | Aluminiumfolie | z. B. 45 µm dick |
| 48 | Schicht C | z. B. Folie aus oPA, 15 µm dick |
| 50 | Schicht D | z. B. Beschichtung aus PE, 15 g/m², oder Folie aus COC/PE coex, 40 µm dick |

Die Schicht B ist die spätere Aussenseite eines aus dem Laminat 20 hergestellten Blisterbodenteils, die Schicht D die Siegelseite zum Aufsiegeln einer Deckfolie.

Bei einer Gefriertrocknung mit einem in Fig. 1 gezeigten Bodenteil 10 werden Einzeldosen 14 eines Arzneimittels in flüssiger Form in die Näpfe 14 eingefüllt. Das Bodenteil 10 durchläuft anschliessend eine Gefrierstation, in welcher die Einzeldosen 14 rasch gefrieren. Anschliessend werden die Bodenteile 10 mit den gefrorenen Einzeldosen 14 in einer Kammer unter Vakuum gefriergetrocknet. Nach der Gefriertrocknung werden die Bodenteile 10 durch Aufsiegeln einer vorzugsweise vom Bodenteil 10 peelbaren Deckfolie 16, z. B. einer Aluminiumfolie, zur fertigen Blisterverpackung 18 verschlossen.

## Patentansprüche

1. Kaltverformbares Laminat aus einer beidseitig mit Kunststoff kaschierten Aluminiumfolie (26, 46) zur Herstellung von Bodenteilen (10) von Blisterverpackungen (18) für im Bodenteil gefriergetrocknete pharmazeutische Produkte (14),
**dadurch gekennzeichnet, dass**
das Laminat (20, 40) die Schichtfolge
- Schicht A (22) / Schicht B (24) / Aluminiumfolie (26) / Schicht C (28) / Schicht D (30), wobei die Schicht A eine 10 bis 100 µm dicke Folie aus COC/PE blend oder coextrudiertem COC-PE ist, die Schichten B und C 10 bis 50 µm dicke Folien aus oPA, oPP oder PET sind und die Schicht D eine 10 bis 100 µm dicke Folie aus COC/PE blend, coextrudiertem COC-PE oder PVC ist, wobei die Schichten A und D verschieden sind, oder
- Schicht A (22) / Schicht B (24) / Aluminiumfolie (26) / Schicht C (28) / Schicht D (30), wobei die Schicht A eine 4 bis 20 µm dicke Folie aus oPP oder PET ist, die Schichten B und C 10 bis 50 µm dicke Folien aus oPA oder PET sind und die Schicht D eine10 bis 100 µm dicke Folie aus COC/PE blend oder coextrudiertem COC/PE ist, oder
- Schicht B (44) / Aluminiumfolie (46) / Schicht C (48 / Schicht D (50), wobei die Schichten B und C 10 bis 50 µm dicke Folien aus oPA oder PET sind und die Schicht D eine Beschichtung aus PE mit einer Grammatur von 8 bis 40 g/m² ist, oder
- Schicht B (44) / Aluminiumfolie (46) / Schicht C (48 / Schicht D (50), wobei die Schichten B und C 10 bis 50 µm dicke Folien aus oPA oder PET sind und die Schicht D eine 10 bis 100 µm dicke Folie aus COC/PE blend oder coextrudiertem COC/PE ist,
aufweist.

2. Laminat nach Anspruch 1, **dadurch gekennzeichnet, dass** die Folien der Schichten A (22) und D (30, 50) aus COC/PE blend oder coextrudiertem COC-PE oder PVC eine Dicke von 15 bis 60 µm aufweisen.

3. Laminat nach Anspruch 1, **dadurch gekennzeichnet, dass** die Folien der Schichten A (42) aus oPP oder PET eine Dicke von 6 bis 10 µm aufweisen.

4. Laminat nach Anspruch 1, **dadurch gekennzeichnet, dass** die Folien der Schichten B (24, 44) und C (28, 48) eine Dicke von 12 bis 30 µm aufweisen.

5. Laminat nach Anspruch 1, **dadurch gekennzeichnet, dass** die Beschichtung der Schicht D (50) eine Grammatur von 10 bis 30 g/m² aufweist.

6. Laminat nach Anspruch 1, **dadurch gekennzeichnet, dass** die Aluminiumfolie (26, 46) eine Dicke von 20 bis 100 µm, vorzugsweise 30 bis 60 µm, aufweist.

7. Verwendung eines Laminates (20, 40) nach einem der vorhergehenden Ansprüche zur Herstellung von Bodenteilen (10) von Blisterverpackungen (18) für in Näpfen (12) im Bodenteil (10) gefriergetrocknete pharmazeutische Produkte (14).
